# FASCICULE DE BREVET EUROPEEN

(11) **EP 4 002 183 B1**
(45) Date de publication et mention de la délivrance du brevet: **22.10.2025**
(21) Numéro de dépôt: 21209699.4
(22) Date de dépôt: 22.11.2021
(51) Int. Cl.: G06F 21/73, H04L 9/08, H04L 9/32

(54) **PROCEDE DE FABRICATION D'UN DISPOSITIF MICROELECTRONIQUE COMPRENANT UNE PLURALITE DE POINTS MEMOIRES RESISTIFS CONFIGUREE POUR FORMER UNE FONCTION PHYSIQUE NON CLONABLE ET LEDIT DISPOSITIF**
VERFAHREN ZUR HERSTELLUNG EINER MIKROELEKTRONISCHEN ANORDNUNG MIT EINER VIELZAHL VON WIDERSTANDSSPEICHERPUNKTEN, DIE ZUR BILDUNG EINER PUF BESTIMMT SIND, UND DIESE ANORDNUNG
METHOD OF MANUFACTURING A MICROELECTRONIC DEVICE COMPRISING A PLURALITY OF RESISTIVE MEMORY POINTS CONFIGURED TO FORM A PHYSICALLY UNCLONABLE FUNCTION AND THE ASSOCIATED DEVICE

(30) Priorité: 23.11.2020 FR 2012006
(43) Date de publication de la demande: 25.05.2022
(73) Titulaire: Commissariat à l'Energie Atomique et aux Energies Alternatives, 75015 Paris (FR)
(72) Inventeur: CHARPIN-NICOLLE, Christelle, 38054 GRENOBLE CEDEX 09 (FR); PEBAY-PEYROULA, Florian, 38054 GRENOBLE CEDEX 09 (FR); GASSILLOUD, Rémy, 38054 GRENOBLE CEDEX 09 (FR); GUILLAUME, Nicolas, 38054 GRENOBLE CEDEX 09 (FR)
(74) Mandataire: Cabinet Camus Lebkiri

(56) Documents cités:
- EP-A1- 3 796 390
- WO-A1-2018/175973
- US-B2- 11 967 376
- PO-HAO TSENG ET AL: "Error free physically unclonable function with programmed resistive random access memory using reliable resistance states by specific identification-generation method", JAPANESE JOURNAL OF APPLIED PHYSICS, vol. 57, no. 4S, 2 March 2018 (2018-03-02), JP, pages 04FE04, XP055710873, ISSN: 0021-4922, DOI: 10.7567/JJAP.57.04FE04

## Description

### DOMAINE DE L'INVENTION

L'invention appartient au domaine des dispositifs microélectroniques comprenant une fonction physique non clonable. Un objet de l'invention est un procédé de fabrication d'un dispositif microélectronique comprenant une fonction physique non clonable ainsi qu'une mémoire de stockage. Un autre objet de l'invention est le dispositif microélectronique obtenu à l'aide du procédé selon l'invention.

### ETAT DE L'ART

La contrefaçon des circuits électroniques intégrés, ou chips, est aujourd'hui un problème majeur pour lequel la réponse en termes de solution de protection n'est pas encore mature ni efficace. La lutte contre la contrefaçon des puces est un enjeu majeur pour l'industrie microélectronique.

Pour lutter contre la contrefaçon on cherche à trouver des solutions qui permettent d'authentifier un circuit afin de pouvoir discriminer s'il s'agit d'un circuit légitime, authentification réussie, ou d'un circuit contrefait, authentification échouée. Une première méthode consiste à utiliser un identifiant unique pour chaque circuit et d'avoir une base de données des identifiants légitimes. Or, il s'avère qu'il est très simple d'émuler - de rejouer - un identifiant valide grâce à une verrue matérielle ou logicielle. L'identifiant unique n'est donc pas une solution viable car il ne protège pas de l'attaque par rejeu.

Un autre mécanisme, très largement utilisé dans le domaine de la sécurité de l'information, est celui dit de « challenge-response ». Ce mécanisme, permet de réaliser une authentification en se protégeant de l'attaque par rejeu. Un utilisateur qui veuille authentifier un dispositif en utilisant ce mécanisme devra effectuer les étapes suivantes :
- l'utilisateur génère un nombre aléatoire N, N étant le challenge ;
- l'utilisateur envoie N au circuit ;
- le circuit calcule R=F(N) à partir d'une fonction secrète F, R étant la réponse ;
- le circuit répond R à l'utilisateur ;
- l'utilisateur compare R avec la réponse attendue, s'il y a égalité l'authentification est réussie.

Pour que la méthode « challenge-response » soit applicable à un dispositif donné, il est nécessaire que le producteur réalise une étape dite de « enrollement » en sortie d'usine, consistant à construire une base de données qui contient des couples légitimes de « challenge-response » pour le dispositif donné. Concrètement, pour chaque circuit intégré, le testeur va générer un certain nombre de challenges N, les envoyer au circuit, récupérer chaque réponse R et va enregistrer dans une base de données les couples N-R. Tout au long du cycle de vie du chip, un utilisateur pourra authentifier le circuit intégré en réalisant les étapes suivantes :
- il demande au fabricant un challenge N de la base de données ;
- le chip calcule la réponse R=F(N) ;
- l'utilisateur ou le fabricant compare cette réponse avec celle stockée en base de données ;
- le couple « challenge-response » est supprimé de la base de données pour éviter tout rejeu.

Cette authentification se déroule au travers d'un protocole sécurisé entre la base de données et le circuit intégré. La solution d'authentification repose sur un élément essentiel : la fonction F. Cette fonction doit être unique à chaque chip et non clonable. On parle alors de fonction physique non-clonable, ou Physical Unclonable Function (PUF) selon la terminologie anglaise, car un attaquant ne doit pas pouvoir recréer physiquement la fonction sinon il serait capable de créer un clone légitime du PUF et donc du circuit.

Une fonction PUF doit donc posséder plusieurs caractéristiques parmi lesquelles un processus de fabrication non maîtrisé, une très forte variabilité interchip et une faible variabilité intra-chip.

Les fonctions PUF existantes sont basées sur des éléments physiques non maîtrisés. Par exemple une des toutes premières PUF (non silicium) est basée sur des bulles d'air que l'on trouve dans un plastique en fusion.

Plusieurs techniques ont été proposées pour obtenir des PUFs dans le domaine de la microélectronique. On peut par exemple citer les techniques intervenant au niveau du boîtier de circuit intégré telles que le « coating » PUFs ou le « magnetic » PUFs reposant sur la distribution aléatoire de particules résistives ou magnétiques.

D'autres techniques interviennent au niveau composant et reposent essentiellement sur la dispersion des caractéristiques physiques. Parmi les circuits intégrés comportant une fonction PUF connus de l'homme du métier on peut citer ceux qui exploitent les temps de propagation des signaux, tels que les circuits en anneau ou les circuits arbitres. Alternativement, il est possible d'exploiter les instabilités au démarrage par exemple dans des dispositifs de type Static Random-Access Memory ou SRAM.

Une implémentation connue de la technologie PUF dans le domaine des mémoires résistives est décrite dans la publication « Error free Physically Unclonable Function (PUF) with programmed ReRAM using reliable resistance states by Novel ID-Generation method » (Tseng et al. - international Conference on Solid State Devices and Materials 2017). Celle-ci est basée sur l'utilisation d'une matrice de mémoires résistives non volatiles réinscriptibles ReRAM telles que des mémoires comportant une zone active à oxydes métalliques (OxRAM ou « Oxide Resistive RAM » selon la terminologie anglaise). Ces mémoires sont des mémoires de type résistives, c'est-à-dire qu'elles peuvent présenter au moins deux états résistifs, correspondant à un état fortement résistif (état « HRS » pour « High Resistance State ») et à un état faiblement résistif (état « LRS » pour « Low Resistance State »), sous l'application d'une tension. La tension nécessaire au passage d'un état HRS à un état LRS correspond à la formation d'un filament conducteur connectant les deux électrodes de chaque point mémoire résistif et est également appelée tension de « forming ».

La méthode connue de l'homme du métier consiste à appliquer une gamme de tensions donnée ; du fait de la dispersion des paramètres physiques des points mémoire on obtient une matrice aléatoire de points mémoire formés et non formés.

Même si cette méthode permet d'obtenir une fonction PUF dans un plan de mémoires ReRAM, sa mise en œuvre est compliquée du fait de la fenêtre très étroite d'interruption de la formation des points mémoires. Cela risque de réduire fortement le caractère aléatoire du dispositif PUF en augmentant ainsi le risque de contrefaçon.

Il n'existe donc pas aujourd'hui un procédé de fabrication d'un dispositif microélectronique intégrant une fonction PUF et une fonction mémoire de stockage qui soit fiable et de réalisation simple, tout en fournissant des circuits intégrés dont la contrefaçon est très difficile.

### RESUME DE L'INVENTION

L'invention vise à résoudre au moins partiellement les problèmes mentionnés ci-dessus en proposant un procédé de fabrication d'un dispositif microélectronique comportant deux techniques de gravure différentes, l'une destinée à la partie PUF du dispositif et assurant une dispersion élevée des paramètres physiques des points mémoire, l'autre destinée à la partie mémoire de stockage du dispositif et assurant une répétabilité des performances des mémoires la plus élevée possible.

A cette fin, un premier objet de l'invention est un procédé de fabrication d'un dispositif microélectronique comprenant une pluralité de points mémoire résistifs, une première partie desdits points mémoire résistifs étant configurée pour former une fonction physique non-clonable PUF, les points mémoire résistifs de ladite première partie formant une zone PUF du dispositif, une deuxième partie desdits points mémoire résistifs étant configurée pour fournir une fonction de mémoire au dispositif microélectronique, les points mémoire résistifs de la deuxième partie formant une zone mémoire du dispositif, ledit procédé de fabrication comprenant les étapes suivantes :
- fourniture d'un support comprenant une première couche d'électrode et une couche d'oxyde actif de mémoire résistive ;
- gravure de la couche d'oxyde actif de mémoire résistive dans la zone PUF du dispositif ;
- gravure de la couche d'oxyde actif de mémoire résistive dans la zone mémoire du dispositif, ladite gravure dans la zone mémoire du dispositif étant réalisée de sorte à produire une dispersion de rugosité de la couche d'oxyde inférieure à la dispersion de rugosité produite par la gravure dans la zone PUF du dispositif ;
- dépôt d'une deuxième couche d'électrode ;
- gravure de la deuxième couche d'électrode, de la couche d'oxyde actif et de la première couche d'électrode et de sorte à définir la pluralité de points mémoire résistifs.

On entend par partie du support correspondant aux points mémoire PUF la partie du dispositif destinée à fournir la fonction PUF. Cette partie du dispositif est également appelée zone PUF ou partie PUF du dispositif. La mémoire de stockage est également appelée zone mémoire ou zone hors PUF du dispositif.

La rugosité de surface des portions de couche diélectrique peut être mesurée par une valeur d'écart moyen de rugosité Ra ou une valeur de hauteur maximale de profil Rmax déterminée au moyen d'images d'1 µm par 1 µm mesurées par microscopie à force atomique également connue sous le sigle anglais AFM pour « Atomic Force Microscopy ".

Une dispersion de rugosité peut généralement être une dispersion d'une valeur d'écart moyen de rugosité Ra des portions de couche diélectrique ou d'une valeur de hauteur maximale de profil Rmax des portions de couche diélectrique, telle qu'un écart type de la valeur d'écart moyen de rugosité Ra ou de la valeur de hauteur maximale de profil Rmax pour les portions de couche diélectrique. Ces valeurs peuvent être déterminées à partir d'images de microscopie à force atomique de 1 µm par 1 µm.

Selon un mode de réalisation, dans la zone mémoire ou hors PUF, les variations de rugosité sont inférieures à 0,1 nm ; dans la zone PUF, les variations de rugosité sont comprises entre 0,2 nm et 1 nm.

De plus, deux portions de couche d'oxyde correspondant à deux points mémoire de la partie PUF présentent une dispersion ou variation de rugosité plus élevée que deux portions de couche d'oxyde correspondant à deux points mémoire résistif de la partie de stockage.

Selon un mode de réalisation, la gravure réalisée dans la zone mémoire permet de produire une variation d'épaisseur de la couche d'oxyde actif inférieure à la variation d'épaisseur obtenue dans la zone PUF. L'épaisseur d'oxyde actif est mesurée très localement, sur une zone de l'ordre de 10 nm par 10 nm. Pour avoir une idée de l'épaisseur obtenue, on peut avoir recours à des techniques telles que le SEM ou le TEM pour obtenir le plus de précision possible. On entend par variation d'épaisseur la différence d'épaisseur entre deux portions de couche d'oxyde appartenant à la même partie du dispositif, PUF ou stockage, et correspondant à deux points mémoire de ladite même partie du dispositif. De ce fait, deux points mémoire de la partie PUF comportent une variation d'épaisseur plus élevée que deux points mémoire de la partie de stockage.

Le procédé selon l'invention permet d'obtenir une forte dispersion de la tension de forming dans la partie PUF du dispositif tout en gardant une dispersion minimale de la tension de forming dans la partie mémoire du dispositif.

Le procédé selon l'invention permet en outre d'élargir la fenêtre de tension de forming pour l'utilisation d'un plan mémoire ReRAM en tant que dispositif PUF. De ce fait, en appliquant une tension de forming dans cette fenêtre élargie, il est possible d'obtenir la formation de sensiblement la moitié des points mémoire résistifs de la partie PUF, en obtenant une bonne diversité de réponse de la partie PUF du dispositif.

En d'autres termes, l'invention permet d'obtenir un élargissement de la fenêtre de la courbe de tension de forming en abaissant sa pente. Cela permettra de viser 50% de cellules formées et 50% de cellules non formées au sein d'une matrice et donc d'obtenir une bonne diversité de PUF.

L'application du procédé selon l'invention permet d'éviter la longue étape de recherche de la tension de forming divulguée par exemple dans l'article de Tseng et coauteurs « Error free Physically Unclonable Function (PUF) with programmed ReRAM using reliable resistance states by Novel ID-Generation method ». En effet, grâce au procédé selon l'invention, la dispersion des tensions de forming dans la partie PUF est très élevée, ce qui facilite la recherche de la tension de forming nécessaire pour l'obtention de la condition de formation de sensiblement 50% des points mémoire résistifs de la partie PUF.

Un autre avantage du procédé selon l'invention est qu'il permet d'obtenir un dispositif comportant une fonction PUF dans le composant Silicium avec une fabrication en backend.

Ainsi, l'obtention de la formation de sensiblement la moitié des mémoires PUF étant facilitée, le procédé de fabrication peut aisément s'automatiser et est pleinement compatible avec la fabrication de masse.

Selon un mode de réalisation, la gravure de la couche d'oxyde dans la zone PUF est une gravure plasma. Avantageusement, l'utilisation d'une gravure plasma permet d'exploiter la répartition non-homogène des gaz de gravure à l'intérieur de la machine de gravure pour obtenir la dispersion de rugosité et d'épaisseurs souhaitées dans la zone PUF.

Selon un mode de réalisation, la gravure de la couche d'oxyde dans la zone Hors-PUF est une gravure comprenant une sous-étape d'implantation d'ions dans la couche d'oxyde actif de sorte à former une sous-couche d'oxyde actif implantée et une sous-étape de nettoyage de la couche d'oxyde actif de sorte à retirer la sous-couche d'oxyde actif implantée. Avantageusement, cet enchaînement technologique permet de retirer la sous-couche implantée avec une très grande précision en obtenant des faibles rugosités, des faibles dispersions de rugosité ainsi que des faibles dispersions d'épaisseurs.

Avantageusement, la gravure dans la zone Hors-PUF est réalisée de sorte à produire des variations d'épaisseur de la couche d'oxyde actif inférieure aux variations d'épaisseur produites par la gravure dans la zone PUF.

Avantageusement, l'étape de gravure dans la zone PUF est précédée par une étape de dépôt d'une couche de protection configurée pour protéger la zone mémoire lors de la gravure dans la zone PUF.

Avantageusement, l'étape de gravure dans la zone mémoire est précédée par une étape de dépôt d'une couche de protection configurée pour protéger la zone PUF lors de la gravure dans la zone mémoire.

Avantageusement, la gravure de la couche d'oxyde actif dans la zone PUF du dispositif est une gravure plasma.

Avantageusement, l'étape de gravure dans la zone mémoire du dispositif comprend une sous-étape d'implantation d'ions dans la couche d'oxyde actif de sorte à former une sous-couche d'oxyde actif implantée et une sous-étape de nettoyage de la couche d'oxyde actif de sorte à retirer la sous-couche d'oxyde actif implantée ; selon ce monde de réalisation, la sous-étape d'implantation d'ions comporte avantageusement l'implantation d'ions F et la sous-étape de nettoyage de la couche d'oxyde est réalisée à l'aide d'une solution de HF.

Avantageusement, les couches d'électrodes sont en Ti ou TiN ou TaN ou W ou Pt et la couche d'oxyde actif est en HfO₂.

Avantageusement, le procédé selon l'invention comprend en outre une étape d'encapsulation des points mémoire à l'aide d'une couche diélectrique.

Avantageusement, l'étape de gravure dans la zone mémoire est réalisée préalablement à l'étape de gravure dans la zone PUF ; alternativement, l'étape de gravure dans la zone PUF est réalisée préalablement à l'étape de gravure dans la zone mémoire.

Avantageusement, le procédé selon l'invention comprend une étape de définition de la partie points mémoire résistifs PUF et de la partie mémoire de stockage, préalablement aux étapes de gravure.

Avantageusement, le procédé selon l'invention comprend une étape de reprise de contacts sur les deux électrodes.

Un autre objet de l'invention est un dispositif microélectronique comprenant une pluralité de points mémoire résistifs, une première partie desdits points mémoire résistifs étant configurée pour former une fonction physique non-clonable, les points mémoire résistifs de ladite première partie formant une zone PUF du dispositif, une deuxième partie desdits points mémoire résistifs étant configurée pour fournir une fonction de mémoire au dispositif microélectronique, les points mémoire résistifs de la deuxième partie formant une zone mémoire du dispositif, chaque point mémoire résistif comprenant une première couche d'électrode et une deuxième couche d'électrode, la première et deuxième couche d'électrode étant séparées par une couche d'oxyde actif de mémoire résistive, la couche d'oxyde actif des points mémoire de la zone PUF présentant une dispersion de rugosité et une variation d'épaisseurs plus élevées que la dispersion de rugosité et la variation d'épaisseur de la couche d'oxyde résistif des points mémoire de la zone mémoire.

Avantageusement, le dispositif selon l'invention fournit une fonction PUF intégré dans le composant Silicium, étant adapté à une fabrication de type backend.

Avantageusement, le dispositif selon l'invention comporte une fenêtre de tensions de forming large dans la partie PUF, ce qui permet d'obtenir facilement une distribution large de tensions de forming et donc une zone PUF efficace pour authentifier le dispositif de façon sûre.

En d'autres termes, deux points mémoire résistifs de la partie PUF présentent une dispersion de rugosité plus élevée que deux points mémoire résistifs de la couche d'oxyde de la mémoire de stockage. De la même façon, deux points mémoire résistifs de la partie PUF présentent une variation d'épaisseur plus élevée que deux points mémoire résistifs de la partie de stockage.

Avantageusement, le dispositif selon l'invention comporte des points mémoire résistifs dans la partie mémoire ayant une dispersion très faible des propriétés physiques, assurant un bon fonctionnement en tant que mémoire de stockage.

### LISTE DES FIGURES

D'autres caractéristiques et avantages de l'invention ressortiront clairement de la description qui en est donnée ci-dessous, à titre indicatif et nullement limitatif, en référence aux figures annexées, parmi lesquelles :
[Fig. 1] illustre schématiquement les étapes du procédé selon l'invention
[Fig. 2] illustre schématiquement le fonctionnement d'un point mémoire résistif utilisé dans l'invention ;
[Fig. 3] illustre schématiquement le dispositif selon l'invention ;
[Fig. 4] illustre le support de dispositif microélectronique utilisé dans l'invention ;
[Fig. 5] illustre le support de dispositif microélectronique utilisé dans l'invention ;
[Fig. 6a illustre les étapes de gravure de la zone PUF ;
[Fig. 6b] illustre les étapes de gravure de la zone PUF ;
[Fig. 7a] illustre les étapes de gravure de la zone PUF ;
[Fig. 7b] illustre les étapes de gravure de la zone PUF ;
[Fig. 8a] illustre la protection de la zone PUF lors de la gravure de la partie mémoire ;
[Fig. 8b] illustre la protection de la zone PUF lors de la gravure de la partie mémoire ;
[Fig. 9a] illustre le résultat de l'étape de gravure de la couche d'oxyde dans la partie mémoire ;
[Fig. 9b] illustre le résultat de l'étape de gravure de la couche d'oxyde dans la partie mémoire ;
[Fig. 10a] illustre l'étape de gravure des couches d'électrode et de reprise de contacts sur les points mémoire ;
[Fig. 10b] illustre l'étape de gravure des couches d'électrode et de reprise de contacts sur les points mémoire ;
[Fig. 11a] illustre l'étape de gravure des couches d'électrode et de reprise de contacts sur les points mémoire ;
[Fig. 11b] illustre l'étape de gravure des couches d'électrode et de reprise de contacts sur les points mémoire.

### DESCRIPTION DETAILEE DE L'INVENTION

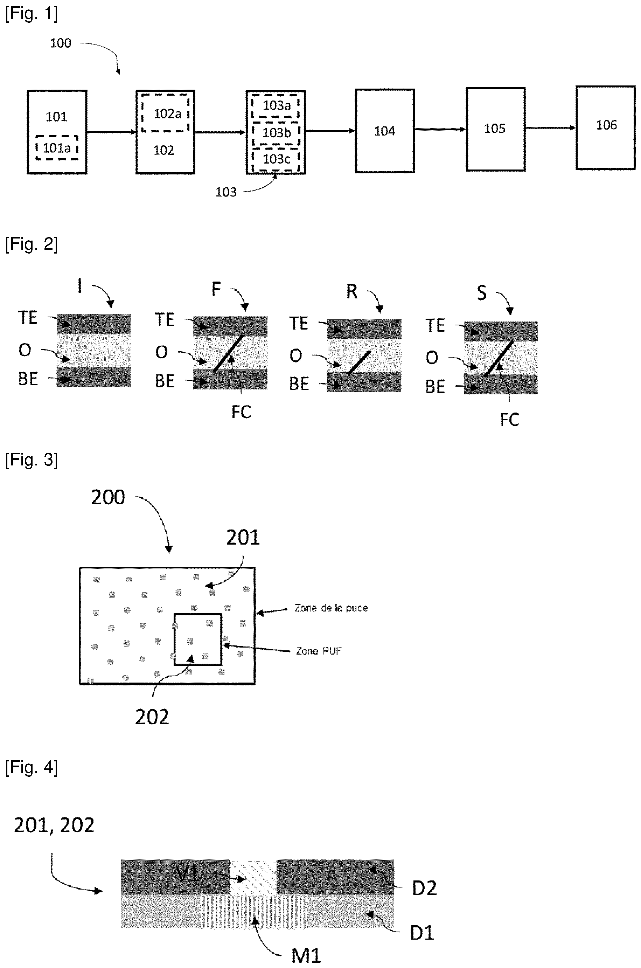

La figure 1 illustre le procédé 100 selon l'invention. Le procédé 100 selon l'invention comprend une étape 101 de fourniture d'un support comprenant une couche d'électrode et une couche d'oxyde actif de mémoire résistive. La couche d'électrode et la couche d'oxyde actif de mémoire résistive sont les premières couches des points mémoire résistifs. Le support est commun à la partie PUF et à la partie stockage du dispositif. Selon un mode de réalisation, l'étape 100 comprend le dépôt de la première couche d'électrode et le dépôt de la couche d'oxyde actif de mémoire résistive.

Selon un mode de réalisation, la couche d'oxyde est déposée avec une épaisseur supérieure à l'épaisseur finale recherchée dans les points mémoire résistifs. Par exemple, la couche d'oxyde est en HfO₂ et la première couche d'électrode en TiN.

Selon un mode de réalisation, le procédé 100 comprend en outre une étape 101a de définition de la partie du support correspondant aux points mémoire PUF et de la partie du support correspondant aux points mémoire de stockage.

Le procédé 100 selon l'invention comprend une étape 102 de gravure de la couche d'oxyde actif de mémoire résistive dans la zone PUF du dispositif. La gravure 102 est réalisée uniquement sur la partie du support correspondant à la zone PUF du dispositif. Selon un mode de réalisation, le procédé 100 selon l'invention comprend en outre une étape 102a de protection de la partie du support correspondant à la zone mémoire du dispositif. Avantageusement, cette étape de protection permet de graver sélectivement la zone PUF lors de l'étape 102.

Selon un mode de réalisation, l'étape 102a est une étape de lithographie comprenant l'étalement d'une résine, son insolation à l'aide d'un masque et l'enlèvement, ou « stripping » selon la terminologie anglaise. Avantageusement, cette étape permet de couvrir avec une couche en résine la zone de stockage qui ne doit pas être gravée lors de l'étape de première gravure 102.

Selon un mode de réalisation, l'étape de gravure 102 dans la zone PUF du dispositif est effectuée à l'aide d'une gravure plasma. Avantageusement, la gravure plasma entraîne une augmentation de la rugosité moyenne et de la rugosité maximale ainsi qu'une augmentation de la variation de rugosité entre deux parties différentes de la zone PUF. Cela permet d'obtenir une variation de rugosité entre points mémoire résistifs différents de la zone PUF et donc une dispersion élevée de tension de forming.

De plus, la gravure plasma va également induire une non-homogénéité d'épaisseur entre deux parties différentes de la zone PUF. Cette non-homogénéité d'épaisseur est liée à répartition des gaz de gravures non parfaitement homogène à l'intérieur du réacteur de la machine de gravure. Cela permet d'augmenter davantage la dispersion de tensions de forming.

Par exemple, en partant d'une épaisseur de 20 nm de HfO₂ et en visant une épaisseur à graver de 10 nm, on peut obtenir des variations d'épaisseur de HfO₂ entre 2 et 3 nm d'une zone PUF à l'autre.

Le procédé 100 selon l'invention comporte en outre une étape 103 de gravure de la couche d'oxyde actif de mémoire résistive dans la zone mémoire du dispositif, la deuxième gravure étant réalisée uniquement sur la partie du support correspondant à la mémoire de stockage.

La gravure dans la zone mémoire est réalisée de sorte à obtenir une zone de stockage avec une rugosité, une dispersion de rugosité et une variation d'épaisseurs inférieures à celles de la zone PUF.

Il est important de noter qu'à ce stade de réalisation, l'épaisseur de HfO₂ dans la zone Hors PUF est trop élevée pour garantir un fonctionnement nominal des cellules OXRAM. En effet, la tension de forming des mémoires OXRAM augmente très rapidement en fonction des l'épaisseur de l'oxyde.

De plus, le fait que dans cette zone et après l'étape de gravure dans la zone PUF 102 on ait en moyenne une épaisseur d'oxyde notablement plus élevée que dans la zone PUF contribue à identifier plus facilement la zone PUF, ce qui n'est pas souhaitable en termes de sécurité.

Avantageusement, l'étape de gravure dans la zone mémoire permet d'obtenir une épaisseur d'oxyde moyenne similaire à celle dans la zone PUF, mais cette fois-ci en minimisant le plus possible les variations d'épaisseur, ceci pour garantir un fonctionnement nominal des mémoires OXRAM. En outre, l'étape de gravure dans la zone mémoire permet de minimiser la dispersion de rugosité de surface sur la couche d'oxyde, la rugosité ayant également un impact sur la tension de forming : une surface présentant un pic induit un effet de pointe et un champ de claquage plus élevé à cet endroit et une tension de forming plus faible.

L'étape de gravure 103 de la couche d'oxyde dans la partie mémoire comprend une sous-étape 103a de protection de la zone PUF. Avantageusement, la sous-étape 103a permet de graver sélectivement la zone de stockage sans modifier la zone PUF du dispositif.

Selon un mode de réalisation, la zone PUF est protégée, lors de la sous-étape 103a par une résine via une étape de lithographie. Le même masque que celui utilisé lors de l'étape 102a peut être utilisé. Dans ce cas, une résine de polarité inversée est requise (polarité inverse de celle utilisée précédemment). Ceci permet d'éviter un surcoût lié à la fabrication d'un autre masque.

Selon un mode de réalisation, l'étape de gravure 103 dans la zone mémoire comprend une sous-étape 103b d'implantation d'ions dans la couche d'oxyde actif de sorte à former une sous-couche d'oxyde actif implantée. Dans ce cas le procédé 100 selon l'invention comprend en outre une sous-étape de nettoyage 103c de la couche d'oxyde actif de sorte à retirer la sous-couche d'oxyde actif implantée.

L'enchaînement des étapes 103b et 103c consiste à réaliser une implantation, par exemple en F, puis de venir nettoyer la surface avec une solution de HF dilué. Des exemples de conditions d'implantation F sont les suivantes : énergie d'implantation de 5 keV, dose allant de 10¹⁴ atomes/cm² à 2.10¹⁵ atomes/cm². Exemple de condition de nettoyage : HF 0.05% de 1 mn à 4 mn.

Lors de l'étape d'implantation d'autres éléments de la colonne des halogènes peuvent être utilisés.

Avantageusement, l'enchaînement des étapes 103b et 103c permet d'enlever la partie implantée de la couche d'oxyde avec une très grande précision.

Avantageusement, les non-uniformités d'implantation sont très faibles et inférieures à 0.5%, ce qui permet d'assurer, après enlèvement de la partie implantée, un très bon contrôle de de l'épaisseur finale de la couche d'oxyde. De plus, le nettoyage par voie humide permet de maintenir la rugosité initiale, voire même de l'améliorer, et en aucun cas de la dégrader.

En d'autres termes, les étapes 103b et 103c permettent de maîtriser l'impact sur la rugosité initiale de la couche d'oxyde voire même de réduire la rugosité initiale et de contrôler parfaitement l'épaisseur finale visée de la couche d'oxyde dans la zone mémoire.

En revanche dans la zone PUF, il est possible d'obtenir des variations de rugosité et une non-uniformité d'épaisseur plus grandes de sorte à obtenir une plus grande dispersion des tensions de forming.

En moyenne, dans les deux zones du dispositif on n'aura pas du tout les mêmes niveaux du rugosités moyennes ni les mêmes dispersions de rugosités.

De plus, on aura en moyenne les mêmes épaisseurs d'oxyde dans les deux zones, mais pas du tout les mêmes uniformités.

Le procédé 100 selon l'invention comporte en outre une étape 104 de dépôt d'une deuxième couche d'électrode. Selon un mode de réalisation cette étape comprend le dépôt d'une couche en Ti ou en TiN ou les deux.

Le procédé 100 selon l'invention comporte en outre une étape 105 de gravure de la première couche d'électrode, de la deuxième couche d'électrode et de la couche d'oxyde actif de sorte à définir la pluralité de points mémoire résistifs.

Avantageusement cette étape permet d'obtenir les points mémoire résistifs de la partie PUF et les points mémoire résistifs de la partie stockage.

Le procédé 100 selon l'invention comprend en outre une étape d'encapsulation 106 des points mémoire à l'aide d'une couche diélectrique.

Selon un mode de réalisation, l'étape d'encapsulation 106 comprend l'encapsulation dans plusieurs couches diélectriques. Des exemples de matériaux diélectriques utilisés lors de l'étape 106 sont SiN et SiO₂.

Selon un mode de réalisation du procédé 100 selon l'invention, l'étape 102 de gravure de la couche d'oxyde dans la zone PUF est réalisée préalablement à l'étape 103 de gravure de la couche d'oxyde dans la zone mémoire. Selon un autre mode de réalisation l'étape 103 de gravure de la couche d'oxyde dans la zone mémoire est réalisée préalablement à l'étape 102 de gravure de la couche d'oxyde dans la zone PUF.

La figure 2 illustre schématiquement le fonctionnement d'un point mémoire résistif comportant une première électrode ou électrode du haut TE, une deuxième électrode ou électrode du bas BE, les deux électrodes étant séparées par une couche O d'oxyde actif de mémoire résistive. Dans son état initial I, les deux électrodes sont isolées électriquement par la couche d'oxyde O. Lors de l'étape dite de « forming » F, une tension électrique appliquée entraîne la formation d'un filament conducteur FC connectant les deux électrodes. Le point mémoire se trouve alors dans son état faiblement résistif LRS. Le procédé selon l'invention permet d'obtenir, dans le même plan mémoire, une zone PUF comprenant une pluralité de points mémoire ayant une dispersion des tensions de forming élevée et une zone mémoire comprenant une pluralité de points mémoire ayant une dispersion des tensions de forming très limitée.

L'application d'une tension ayant une polarité opposée à la tension de forming permet d'effectuer une opération de reset R du point mémoire en détruisant partiellement le filament conducteur FC. Le point mémoire se trouve alors à nouveau dans son état hautement résistif. Une opération de set S permet de faire basculer le point mémoire de son état hautement résistif vers son état faiblement résistif grâce à la reconstitution du filament conducteur FC (représenté ici schématiquement sous la forme d'un segment mais dont la forme peut évidemment varier).

Un autre objet de l'invention est le dispositif microélectronique 200 illustré à la figure 3. Le dispositif 200 est obtenu à l'aide du procédé 100 selon l'invention. Le dispositif 200 comprend une partie 201 comprenant une pluralité de points mémoire résistifs destinés à fournir une fonction de mémoire et une partie 202 comprenant une pluralité de points mémoire résistifs destinés à fournir une fonction PUF. Deux points mémoire résistifs de la partie PUF ont une différence de rugosité et une différence d'épaisseur de la couche d'oxyde plus élevées que deux points mémoire résistifs de la partie mémoire.

Avantageusement, les différences de rugosité et d'épaisseur de la couche d'oxyde permettent d'obtenir un dispositif qui comporte en même temps une fonction PUF et une fonction mémoire de stockage.

La figure 4 illustre une partie du support de dispositif microélectronique fourni lors de l'étape 101 du dispositif 100 selon l'invention. Le support comporte une première couche comprenant un premier matériel diélectrique D1 et un premier matériel métallique M1. Le support comprend en outre une deuxième couche comprenant un deuxième matériel diélectrique D2 et un via V1. Selon un mode de réalisation la couche D1 peut comprendre du SiO2 et la couche D2 du SiN. Le via V1 peut être métallisé en tungstène. M1 correspond aux lignes métalliques ; elles peuvent être en cuivre, en aluminium ou en autre matériau conducteur d'électricité. Le via V1 a pour objet de conduire le courant jusqu'à un objet microélectronique. Il peut être constitué par exemple en W, TiN ou TaN. Les couches de diélectriques ont pour objectif d'isoler électriquement les différents dispositifs microélectronique entre eux.

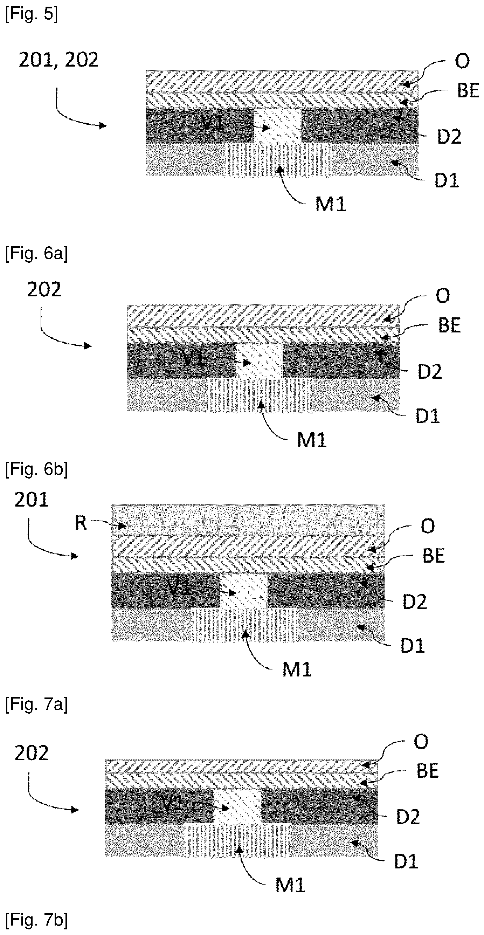

La figure 5 illustre que le support de dispositif microélectronique comporte en outre une première couche d'électrode BE et une couche O d'oxyde actif de mémoire résistive. Le via V1 permet d'établir un contact électrique entre le métal M1 et la première couche d'électrode BE. Selon un mode de réalisation, la première couche d'électrode BE comprend par exemple du TiN. Selon un mode de réalisation la couche d'oxyde O comprend du HfO₂.

La figure 6a illustre une vue en coupe du dispositif préalablement à l'étape 102 de gravure dans la zone PUF et en correspondance de la partie PUF du dispositif. La figure 6b illustre une vue en coupe du dispositif préalablement à l'étape 102 de gravure dans la zone PUF et en correspondance de la partie mémoire du dispositif. La figure 6b illustre que la partie mémoire est protégée lors de la gravure dans la zone PUF par une couche en résine R. La couche en résine R est déposée par exemple lors de l'étape 102a. La conception et l'utilisation d'un masque adapté permettent de réaliser la couche en résine R uniquement en correspondance de la partie mémoire du dispositif.

Les figures 7a et 7b montrent respectivement une vue en coupe de la zone PUF et de la zone mémoire après l'étape de gravure dans la zone PUF et après l'enlèvement de la couche en résine R ou « stripping » selon la terminologie anglaise. La figure 7a illustre la réduction d'épaisseur de la couche d'oxyde due à l'effet de la gravure en correspondance de la partie PUF du dispositif. La figure 7b montre que la couche d'oxyde O en correspondance de la partie mémoire n'est pas modifiée lors de l'étape 102 de première gravure.

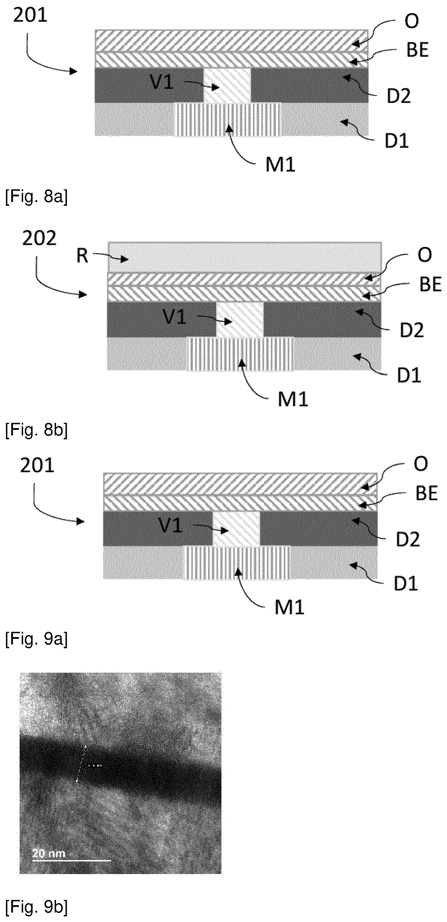

Les figures 8a et 8b montrent une vue en coupe du dispositif microélectronique selon l'invention préalablement à l'étape 103 de gravure dans la zone mémoire. La figure 8a montre qu'une couche de résine R est réalisée en correspondance de la zone PUF lors de l'étape 103a de protection de la zone PUF. La figure 8b illustre que la résine R ne protège pas la partie mémoire lors de l'étape de gravure 103 dans la zone mémoire.

Avantageusement, l'étape de gravure 103 dans la zone mémoire permet de réduire l'épaisseur de la couche d'oxyde O en correspondance de la partie mémoire du dispositif. A ce stade de réalisation, l'épaisseur de HfO₂ dans la zone Hors PUF est trop élevée pour garantir un fonctionnement nominal des points mémoire résistifs ; en effet, la tension de forming des mémoires résistives augmente très rapidement en fonction des l'épaisseur de l'oxyde. Cet aspect constitue par ailleurs un des points durs bloquant l'introduction de ce type de mémoire.

De plus, le fait que dans cette zone, on ait en moyenne une épaisseur de la couche d'oxyde O notablement plus élevée que dans la zone PUF contribue à identifier plus facilement la zone PUF, ce qui n'est pas souhaitable en termes de sécurité.

L'étape de gravure 103 dans la zone mémoire permet donc d'avoir une épaisseur de la couche d'oxyde O moyenne similaire à celle dans la zone PUF, mais cette fois-ci en minimisant le plus possible les variations d'épaisseur, ceci pour garantir un fonctionnement nominal des points mémoire résistifs. De la même façon, nous souhaitons ne pas avoir de dispersion de rugosité de surface sur la couche d'oxyde en correspondance de la zone mémoire, la rugosité ayant également un impact sur la tension de forming : une surface présentant un pic induit un effet de pointe et un champ de claquage plus élevé à cet endroit et une tension de forming plus faible.

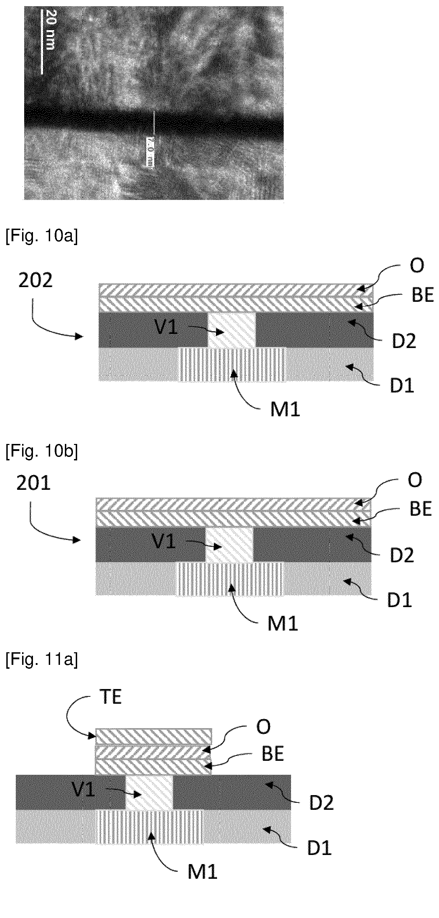

Les figures 9 et 10 montrent deux images de la couche d'oxyde O respectivement avant et après l'étape de gravure dans la zone mémoire. Ces images sont obtenues par microscopie électronique à balayage. Ces images montrent que, après enlèvement de la partie implantée, on obtient un très bon contrôle de de l'épaisseur finale de la couche d'oxyde. De plus, le nettoyage par voie humide permet de maintenir la rugosité initiale, voire même de l'améliorer, et en aucun cas de la dégrader.

Lors des étapes 104 de dépôt de la deuxième couche d'électrode TE ou électrode supérieure, puis 106 de définition des points mémoire, les deux zones PUF et mémoire sont traitées de façon identique, avec le dépôt des matériaux constituant l'électrode supérieure, par exemple Ti, TiN et la définition des motifs constituant les points mémoire dans toute la cellule. Selon un mode de réalisation, un diélectrique de type SiN servant de masque dur peut être également utilisé.

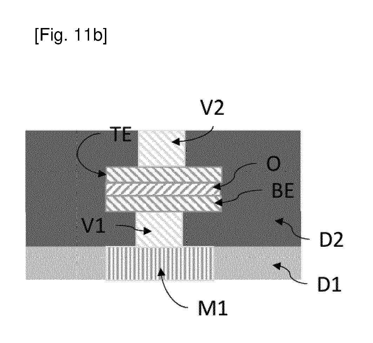

La figure 11b illustre le résultat de l'étape 106 d'encapsulation des points mémoire à l'aide d'une couche diélectrique, par exemple en SiN. Selon un mode de réalisation, des vias V1 et V2 peuvent être utilisées pour reprendre les contacts sur les points mémoire de la zone PUF et de la zone mémoire.

## Revendications

1. Procédé (100) de fabrication d'un dispositif microélectronique comprenant une pluralité de points mémoire résistifs, une première partie desdits points mémoire résistifs étant configurée pour former une fonction physique non-clonable, les points mémoire résistifs de ladite première partie formant une zone PUF du dispositif, une deuxième partie desdits points mémoire résistifs étant configurée pour fournir une fonction de mémoire au dispositif microélectronique, les points mémoire résistifs de la deuxième partie formant une zone mémoire du dispositif, ledit procédé de fabrication étant **caractérisé en ce qu'**il comprend les étapes suivantes :
- fourniture (101) d'un support comprenant une première couche d'électrode et une couche d'oxyde actif de mémoire résistive ;
- gravure (102) de la couche d'oxyde actif de mémoire résistive dans la zone PUF du dispositif ;
- gravure (103) de la couche d'oxyde actif de mémoire résistive dans la zone mémoire du dispositif, ladite gravure dans la zone mémoire du dispositif étant réalisée de sorte à produire une dispersion de rugosité de la couche d'oxyde inférieure à la dispersion de rugosité produite par la gravure dans la zone PUF du dispositif ;
- dépôt (104) d'une deuxième couche d'électrode ;
- gravure (105) de la deuxième couche d'électrode, de la couche d'oxyde actif et de la première couche d'électrode et de sorte à définir la pluralité de points mémoire résistifs.

2. Procédé (100) de fabrication d'un dispositif microélectronique selon la revendication précédente **caractérisé en ce que** la gravure dans la zone mémoire du dispositif (103) est réalisée de sorte à produire des variations d'épaisseur de la couche d'oxyde actif inférieure aux variations d'épaisseur produites par la gravure dans la zone PUF du dispositif (102).

3. Procédé (100) de fabrication d'un dispositif microélectronique selon l'une des revendications précédentes **caractérisé en ce que** l'étape de gravure dans la zone PUF du dispositif est précédée par une étape de dépôt (102a) d'une couche de protection configurée pour protéger la zone mémoire du dispositif lors de la gravure dans la zone PUF du dispositif.

4. Procédé (100) de fabrication d'un dispositif microélectronique selon l'une des revendications précédentes **caractérisé en ce que** l'étape de gravure dans la zone mémoire du dispositif est précédée par une étape de dépôt (103a) d'une couche de protection configurée pour protéger la zone PUF du dispositif lors de la gravure dans la zone mémoire du dispositif.

5. Procédé (100) de fabrication d'un dispositif microélectronique selon l'une des revendications précédentes **caractérisé en ce que** la gravure dans la zone PUF du dispositif (102) est une gravure plasma.

6. Procédé (100) de fabrication d'un dispositif microélectronique selon l'une des revendications précédentes **caractérisé en ce que** l'étape de gravure dans la zone mémoire du dispositif (103) comprend une sous-étape d'implantation d'ions (103b) dans la couche d'oxyde actif de sorte à former une sous-couche d'oxyde actif implantée et une sous-étape de nettoyage (103c) de la couche d'oxyde actif de sorte à retirer la sous-couche d'oxyde actif implantée.

7. Procédé (100) de fabrication d'un dispositif microélectronique selon la revendication précédente **caractérisé en ce que** la sous-étape d'implantation d'ions (103b) comporte l'implantation d'ions F et **en ce que** la sous-étape de nettoyage (103c) de la couche d'oxyde est réalisée à l'aide d'une solution de HF.

8. Procédé (100) de fabrication d'un dispositif microélectronique selon l'une des revendications précédentes **caractérisé en ce que** les couches d'électrodes sont en Ti ou TiN ou TaN ou W ou Pt et que la couche d'oxyde actif est en HfO₂.

9. Procédé (100) de fabrication d'un dispositif microélectronique selon l'une des revendications précédentes **caractérisé en ce qu'**il comprend en outre une étape d'encapsulation (106) des points mémoire à l'aide d'une couche diélectrique.

10. Procédé (100) de fabrication d'un dispositif microélectronique selon l'une des revendications précédentes **caractérisé en ce que** l'étape de gravure dans la zone mémoire du dispositif est réalisée préalablement à l'étape de gravure dans la zone PUF du dispositif.

11. Dispositif microélectronique (200) comprenant une pluralité de points mémoire résistifs, une première partie (202) desdits points mémoire résistifs étant configurée pour former une fonction physique non-clonable, les points mémoire résistifs de ladite première partie formant une zone PUF du dispositif, une deuxième partie (201) desdits points mémoire résistifs étant configurée pour fournir une fonction de mémoire au dispositif microélectronique, les points mémoire résistifs de la deuxième partie formant une zone mémoire du dispositif, chaque point mémoire résistif comprenant une première couche d'électrode et une deuxième couche d'électrode, la première et deuxième couche d'électrode étant séparées par une couche d'oxyde actif de mémoire résistive, ledit dispositif microélectronique étant **caractérisé en ce que** la couche d'oxyde actif des points mémoire résistifs de la zone PUF présente une dispersion de rugosité et une variation d'épaisseur plus élevées que la dispersion de rugosité et la variation d'épaisseur de la couche d'oxyde résistif des points mémoire de la zone mémoire.

## Patentansprüche

1. Verfahren (100) zur Herstellung einer mikroelektronischen Vorrichtung mit einer Vielzahl von resistiven Speicherpunkten, wobei ein erster Teil der resistiven Speicherpunkte so gestaltet ist, dass er eine nicht klonbare physikalische Funktion bildet, wobei die resistiven Speicherpunkte des ersten Teils einen PUF-Bereich der Vorrichtung bilden, wobei ein zweiter Teil der resistiven Speicherpunkte so gestaltet ist, dass er eine Speicherfunktion für die mikroelektronische Vorrichtung bereitstellt, wobei die resistiven Speicherpunkte des zweiten Teils einen Speicherbereich der Vorrichtung bilden, wobei das Herstellungsverfahren **dadurch gekennzeichnet ist, dass** es die folgenden Schritte umfasst:
- Bereitstellen (101) eines Trägers, der eine erste Elektrodenschicht und eine aktive Oxidschicht für den resistiven Speicher umfasst;
- Ätzen (102) der aktiven Oxidschicht des resistiven Speichers im PUF-Bereich der Vorrichtung;
- Ätzen (103) der aktiven Oxidschicht des resistiven Speichers in der Speicherzone der Vorrichtung, wobei das Ätzen in der Speicherzone der Vorrichtung so durchgeführt wird, dass eine Rauheitsstreuung der Oxidschicht erzeugt wird, die geringer ist als die Rauheitsstreuung, die durch das Ätzen im PUF-Bereich der Vorrichtung erzeugt wird;
- Aufbringen (104) einer zweiten Elektrodenschicht;
- Ätzen (105) der zweiten Elektrodenschicht, der aktiven Oxidschicht und der ersten Elektrodenschicht, um die Vielzahl von resistiven Speicherpunkten zu definieren.

2. Verfahren (100) zur Herstellung einer mikroelektronischen Vorrichtung gemäß dem vorhergehenden Anspruch, **dadurch gekennzeichnet, dass** das Ätzen in der Speicherzone der Vorrichtung (103) so durchgeführt wird, dass die Dicke der aktiven Oxidschicht weniger variiert als die Dicke, die durch das Ätzen im PUF-Bereich der Vorrichtung (102) erzeugt wird.

3. Verfahren (100) zur Herstellung einer mikroelektronischen Vorrichtung gemäß einem der vorstehenden Ansprüche, **dadurch gekennzeichnet, dass** dem Ätzschritt in der PUF-Zone der Vorrichtung ein Schritt (102a) zum Aufbringen einer Schutzschicht vorausgeht, die so gestaltet ist, dass sie die Speicherzone der Vorrichtung beim Ätzen in der PUF-Zone der Vorrichtung schützt.

4. Verfahren (100) zur Herstellung einer mikroelektronischen Vorrichtung gemäß einem der vorstehenden Ansprüche, **dadurch gekennzeichnet, dass** dem Ätzschritt in der Speicherzone der Vorrichtung ein Schritt (103a) zum Aufbringen einer Schutzschicht vorausgeht, die so gestaltet ist, dass sie die PUF-Zone der Vorrichtung beim Ätzen in der Speicherzone der Vorrichtung schützt.

5. Verfahren (100) zur Herstellung einer mikroelektronischen Vorrichtung gemäß einem der vorstehenden Ansprüche, **dadurch gekennzeichnet, dass** das Ätzen in der PUF-Zone der Vorrichtung (102) ein Plasmaätzen ist.

6. Verfahren (100) zur Herstellung einer mikroelektronischen Vorrichtung gemäß einem der vorstehenden Ansprüche, **dadurch gekennzeichnet, dass** der Schritt des Ätzens in der Speicherzone der Vorrichtung (103) einen Teilschritt des Implantierens von Ionen (103b) in die aktive Oxidschicht umfasst, um eine implantierte aktive Oxidunterschicht zu bilden, und einen Teilschritt zum Reinigen (103c) der aktiven Oxidschicht, um die implantierte aktive Oxidunterschicht zu entfernen.

7. Verfahren (100) zur Herstellung einer mikroelektronischen Vorrichtung gemäß dem vorhergehenden Anspruch, **dadurch gekennzeichnet, dass** der Teilschritt des Implantierens von Ionen (103b) die Implantation von F-Ionen umfasst und dass der Teilschritt des Reinigens (103c) der Oxidschicht mithilfe einer HF-Lösung durchgeführt wird.

8. Verfahren (100) zur Herstellung einer mikroelektronischen Vorrichtung gemäß einem der vorstehenden Ansprüche, **dadurch gekennzeichnet, dass** die Elektrodenschichten aus Ti oder TiN oder TaN oder W oder Pt bestehen und die aktive Oxidschicht aus HfO₂ besteht.

9. Verfahren (100) zur Herstellung einer mikroelektronischen Vorrichtung gemäß einem der vorstehenden Ansprüche, **dadurch gekennzeichnet, dass** es außerdem einen Schritt zum Einkapseln (106) der Speicherpunkte mithilfe einer dielektrischen Schicht umfasst.

10. Verfahren (100) zur Herstellung einer mikroelektronischen Vorrichtung gemäß einem der vorstehenden Ansprüche, **dadurch gekennzeichnet, dass** der Schritt des Ätzens in der Speicherzone der Vorrichtung vor dem Schritt des Ätzens in der PUF-Zone der Vorrichtung durchgeführt wird.

11. Mikroelektronische Vorrichtung (200) mit einer Vielzahl von resistiven Speicherpunkten, wobei ein erster Teil (202) der resistiven Speicherpunkte so gestaltet ist, dass er eine nicht klonbare physikalische Funktion bildet, wobei die resistiven Speicherpunkte des ersten Teils eine PUF-Zone der Vorrichtung bilden, wobei ein zweiter Teil (201) der resistiven Speicherpunkte so gestaltet ist, dass er eine Speicherfunktion für die mikroelektronische Vorrichtung bereitstellt, wobei die resistiven Speicherpunkte des zweiten Teils einen Speicherbereich der Vorrichtung bilden, wobei jeder resistive Speicherpunkt eine erste Elektrodenschicht und eine zweite Elektrodenschicht umfasst, wobei die erste und die zweite Elektrodenschicht durch eine aktive Oxidschicht des resistiven Speichers getrennt sind, wobei die mikroelektronische Vorrichtung **dadurch gekennzeichnet ist, dass** die aktive Oxidschicht der resistiven Speicherpunkte der PUF-Zone eine höhere Rauhtypverteilung und eine höhere Dickenvariation aufweist als die Rauhtypverteilung und die Dickenvariation der resistiven Oxidschicht der Speicherpunkte der Speicherzone.

## Claims

1. Method (100) for manufacturing a microelectronic device comprising a plurality of resistive memory points, a first portion of said resistive memory points being configured to form a physical unclonable function, the resistive memory points of said first portion forming a PUF zone of the device, a second portion of said resistive memory points being configured to provide a memory function to the microelectronic device, the resistive memory points of the second portion forming a memory zone of the device, said method for manufacturing being **characterised in that** it comprises the following steps:
- providing (101) a support comprising a first electrode layer and an active oxide resistive memory layer;
- etching (102) of the active oxide resistive memory layer in the PUF zone of the device;
- etching (103) of the active oxide resistive memory layer in the memory zone of the device, said etching in the memory zone of the device being carried out in such a way as to produce a dispersion of roughness of the oxide layer less than the dispersion of roughness produced by the etching in the PUF zone of the device;
- deposition (104) of a second electrode layer;
- etching (105) of the second electrode layer, of the active oxide layer and of the first electrode layer and in such a way as to define the plurality of resistive memory points.

2. Method (100) for manufacturing a microelectronic device according to the preceding claim **characterised in that** the etching in the memory zone of the device (103) is carried out in such a way as to produce variations in thickness of the active oxide layer less than the variations in thickness produced by the etching in the PUF zone of the device (102).

3. Method (100) for manufacturing a microelectronic device according to one of the preceding claims **characterised in that** the step of etching in the PUF zone of the device is preceded by a step of deposition (102a) of a protection layer configured to protect the memory zone of the device during the etching in the PUF zone of the device.

4. Method (100) for manufacturing a microelectronic device according to one of the preceding claims **characterised in that** the step of etching in the memory zone of the device is preceded by a step of deposition (103a) of a protection layer configured to protect the PUF zone of the device during the etching in the memory zone of the device.

5. Method (100) for manufacturing a microelectronic device according to one of the preceding claims **characterised in that** the etching in the PUF zone of the device (102) is a plasma etching.

6. Method (100) for manufacturing a microelectronic device according to one of the preceding claims **characterised in that** the step of etching in the memory zone of the device (103) comprises a substep of ion implanting (103b) in the active oxide layer in such a way as to form an implanted active oxide sublayer and a substep of cleaning (103c) the active oxide layer in such a way as to remove the implanted active oxide sublayer.

7. Method (100) for manufacturing a microelectronic device according to the preceding claim **characterised in that** the substep of ion implanting (103b) comprises the implanting of F ions and **in that** the substep of cleaning (103c) the oxide layer is carried out using an HF solution.

8. Method (100) for manufacturing a microelectronic device according to one of the preceding claims **characterised in that** the electrode layers are made from **Ti** or TiN or TaN or W or Pt and **in that** the active oxide layer is made from HfO₂.

9. Method (100) for manufacturing a microelectronic device according to one of the preceding claims **characterised in that** it further comprises a step of encapsulating (106) memory points using a dielectric layer.

10. Method (100) for manufacturing a microelectronic device according to one of the preceding claims **characterised in that** the step of etching in the memory zone of the device is carried out prior to the step of etching in the PUF zone of the device.

11. Microelectronic device (200) comprising a plurality of resistive memory points, a first portion (202) of said resistive memory points being configured to form a physical unclonable function, the resistive memory points of said first portion forming a PUF zone of the device, a second portion (201) of said resistive memory points being configured to provide a memory function to the microelectronic device, the resistive memory points of the second portion forming a memory zone of the device, each resistive memory point comprising a first electrode layer and a second electrode layer, the first and second electrode layer being separated by an active oxide resistive memory layer, said microelectronic device being **characterised in that** the active oxide layer of the resistive memory points of the PUF zone has a dispersion of roughness and a variation in thickness that are higher than the dispersion of roughness and the variation in thickness of the resistive oxide layer of the memory points of the memory zone.
